# EUROPÄISCHE PATENTANMELDUNG

(11) **EP 1 607 640 A1**
(43) Veröffentlichungstag der Anmeldung: **21.12.2005**
(21) Anmeldenummer: 04291527.2
(22) Anmeldetag: 17.06.2004
(51) Int. Cl.: F16B 37/04

(54) **Verfahren zum präzisen Montieren eines Geräts auf einem Blechteil**

(71) Anmelder: Lisi Automotive Rapid, 95650 Puiseux Pontoise (FR); Bayerische Motoren Werke Aktiengesellschaft, 80809 München (DE)
(72) Erfinder: Endres, Markus, 69214 Eppelheim (DE); Huck, Thomas, 69207 Sandhausen (DE); Kolb, Walter, 69214 Eppelheim (DE); Leon, Jean-Pierre, 78800 Houilles (FR); Weiss, Hans-Georg, 68239 Mannheim (DE); Bauer, Richard, 85276 Pfaffenhofen (DE); Schlicht, Gerald, 81677 München (DE)
(74) Vertreter: Thinat, Michel

(57) **Zusammenfassung**

Die Erfindung betrifft ein Verfahren zum präzisen Montieren eines Geräts auf einem Blechteil, wobei das Blechteil zunächst geformt, gegebenenfalls aus mehreren Teilblechen zusammengesetzt und in einem weiteren Schritt oberflächenbehandelt wird. Vor der Oberflächenbehandlung wird ein Loch in das Blechteil eingebracht wird, in das nach der Oberflächenbehandlung eine Käfigmutter für das Montieren des Geräts eingesetzt wird.

## Beschreibung

Die Erfindung betrifft ein Verfahren zum präzisen Montieren eines Geräts auf einem Blechteil nach dem Oberbegriff des Patentanspruchs 1.

In der Kraftfahrzeugindustrie und auch in anderen technischen Bereichen wie zum Beispiel beim Bau von Schaltschränken, ist es üblich, für Befestigungen, die nur von der Vorderfront her zugänglich sind, Gewindebolzen, Anschweißmuttern, Nietmuttern, Spreizmuttern, Laschenschrauben und dergleichen zu verwenden. Diese Befestigungselemente werden an dem Blechteil, an dem zum Beispiel ein Anbaugerät oder eine sicherheitsrelevante Baugruppe befestigt werden soll, angeschweißt. Anschließend wird das Befestigungsteil abgedeckt, zum Beispiel durch eine Schutzmutter, wenn es sich um einen Gewindebolzen handelt, oder durch eine Plastikschraube, wenn es sich um ein Gewinde handelt. Anschließend wird die Oberfläche des Blechteils behandelt, zum Beispiel lackiert. Danach wird die Schutzmutter beziehungsweise die Plastikschraube wieder entfernt und das Gerät kann montiert werden.

Beim Anbringen dieser Befestigungselemente findet eine Veränderung des Metallgefüges durch das Schweißen statt. Aber auch bei anderen Arten der Anbringung der Befestigungsmittel oder spätestens beim Entfernen des Lacks von den Befestigungsmitteln kommt es in der Regel zu Veränderungen der Position des Befestigungselementes. Derartige Veränderungen spielen kein große Rolle, solange die daran zu befestigenden Geräte sich nicht in einer genau festgelegten Position befinden müssen, um ordnungsgemäß zu funktionieren.

Wenn es aber um die Befestigung von Geräten oder Geräteteilen mit sicherheitsrelevanter Funktion geht, zum Beispiel um Baugruppen mit integrierten Beschleunigungsaufnehmern, die während der gesamten Lebensdauer des Geräts einwandfrei funktionieren müssen, dann ist eine sich während der Montage verändernde Anbringung von Befestigungselementen nicht zulässig.

Aufgabe der Erfindung ist es daher, die Anbringung von Befestigungselementen an Blechteilen zuverlässiger zu gestalten.

Diese Aufgabe wird durch ein Verfahren mit den Merkmalen des Patentanspruchs 1 gelöst.

Gemäß dem erfindungsgemäßen Verfahren zum präzisen Montieren eines Gerätes auf einem Blechteil wird zunächst, wie bisher auch, das Blechteil geformt und gegebenenfalls aus mehreren Teilblechen zusammengesetzt. Anschließend werden ein oder mehrere Löcher gebohrt oder gestanzt, in die eine Käfigmutter für das Montieren des Geräts eingesetzt wird.

Im anschließenden Verfahrensschritt wird das Blechteil oberflächenbehandelt, also zum Beispiel mit einer Lackschicht versehen. Danach wird in jedes der zuvor eingebrachten Löcher eine Käfigmutter eingesetzt. Damit ist das Blechteil für das Montieren des Geräts fertig vorbereitet. Das Montieren des Gerätes stellt dann den letzten Verfahrensschritt dar.

Vergleicht man das erfindungsgemäße Verfahren mit dem vor der Erfindung angewendeten Verfahren, dann stellt man fest, daß weder das Blechteil noch die vorgesehenen Befestigungselemente irgendwelchen Verfahrenschritten ausgesetzt sind, die eine Änderung des Metallgefüges des Blechteils oder eines der Befestigungselemente mit sich bringen, daß Schweißabbrand vorliegt, der eine Nacharbeit erfordert, oder daß das Blechteil oder eines der Befestigungselemente der Gefahr einer sonstigen Veränderung ausgesetzt ist, auf Grund der ein am Anfang des Verfahrens angebrachtes Befestigungselement nicht mehr die erforderliche Maßhaltigkeit aufweist. Ebenso wenig liegen im erfindungsgemäßen Verfahren gegensätzliche Schritte vor, wie etwa das Aufbringen und das anschließende Entfernen einer Lackschicht auf dem Befestigungselement.

Es entfallen also auch zusätzliche Verarbeitungsschritte, in denen die zum Beispiel während der Oberflächenbehandlung auftretenden Veränderungen in der Anbringung der Befestigngselemente korrigiert werden.

Gemäß dem erfingungsgemäßen Verfahren werden also die Befestigungselemente, wie insbesondere die Käfigmuttern, erst in das Blechteil eingesetzt, wenn die Oberfläche bereits zum Zwecke des Korrosionsschutzes fertig vorbereitet ist.

Daraus ergibt sich einerseits ein Kostenvorteil (Reduzierung der Arbeitsschritte) und andererseits eine Qualitätsverbesserung, insbesondere eine wesentliche Erhöhung der Genauigkeit des Anbringens der Befestigungselemente. Während das Setzen eines Bolzens mit einer Genauigkeit von ± 2 Millimeter erfolgt, kann das Stanzen eines Lochs mit einer Genauigkeit von ± 0,2 Millimeter erfolgen.

Die Frage der Genauigkeit ist insofern wesentlich, als mit zunehmender Toleranz die Ausrichtung in x-Richtung immer stärker abweicht, was bei beschleunigungsbasierenden Systemen, wie zum Beispiel in einem Airbag mit den zugehörigen Sensoren oder in anderen sicherheitsrelevanten Baugruppen, zu erheblichen Funktionsstörungen führen würde. Die mit dem erfindungsgemäßen Verfahren erzielbare höhere Fertigungsgenauigkeit ermöglicht also auch eine wesentlich verbesserte Funktionssicherheit beschleunigungsbasierender Systeme.

Darüber hinaus bietet das erfindungsgemäße Verfahren, und insbesondere das Einsetzen einer Käfigmutter in ein vollständig vorbereites Blechteil eine verbesserte und kostengünstige Reparaturmöglichkeit.

Ein weiterer Vorteil des erfindungsgemäßen Verfahrens besteht darin, während der Montage auf einfache Weise Fehler beheben zu können, insbesondere durch Auswechseln der Käfigmutter.

## Patentansprüche

1. Verfahren zum präzisen Montieren eines Geräts auf einem Blechteil, wobei das Blechteil zunächst geformt, gegebenenfalls aus mehreren Teilblechen zusammengesetzt und in einem weiteren Schritt oberflächenbehandelt wird, **dadurch gekennzeichnet, daß** vor der Oberflächenbehandlung ein Loch in das Blechteil eingebracht wird, in das nach der Oberflächenbehandlung eine Käfigmutter für das Montieren des Geräts eingesetzt wird.

2. Verfahren nach Anspruch 1, **gekennzeichnet durch** die aufeinander folgenden Schritte des Formens des Blechteils, des Einbringens eines Lochs für eine Käfigmutter, des Behandelns der Oberfläche des Blechteils, des Einsetzens der Käfigmutter in das Loch und des Montierens des Geräts.

3. Verfahren nach Anspruch 1, **dadurch gekennzeichnet, daß** die Oberflächenbehandlung des Blechteils im Auftragen einer oder mehrerer Farb- oder Lackschichten besteht.
